# FASCICULE DE BREVET EUROPEEN

(11) **EP 1 493 069 B1**
(45) Date de publication et mention de la délivrance du brevet: **21.03.2007**
(21) Numéro de dépôt: 03745820.5
(22) Date de dépôt: 04.04.2003
(51) Int. Cl.: G05B 23/02

(54) **PROCEDE DE DIAGNOSTIC D'UN EQUIPEMENT A CONTROLER ET SYSTEME DE DIAGNOSTIC ASSOCIE**
DIAGNOSTISCHES VERFAHREN FÜR EIN GESTEUERTES GERÄT UND ENTSPRECHENDES DIAGNOSTIKSYSTEM
METHOD FOR DIAGNOSING AN EQUIPMENT TO BE CONTROLLED AND RELATED DIAGNOSTIC SYSTEM

(30) Priorité: 08.04.2002 FR 0204371
(43) Date de publication de la demande: 05.01.2005
(73) Titulaire: FRANCE TELECOM, 75015 Paris (FR)
(72) Inventeur: MARTINIERE, Jean-Pierre, F-35340 Liffre (FR)
(86) Numéro de dépôt international: PCT/FR2003/001065
(87) Numéro de publication internationale: WO 2003/085469

(56) Documents cités:
- EP-A- 0 599 606
- EP-A- 0 895 399
- EP-A- 0 965 897
- EP-A- 1 045 302
- WO-A-97/15009
- US-A1- 2002 032 544
- US-B1- 6 311 101

## Description

La présente invention concerne un procédé de diagnostic d'un équipement à contrôler, un système de diagnostic, des serveurs et un module de communication pour la mise en oeuvre du procédé.

Il existe différentes méthodes pour effectuer un diagnostic sur un équipement, par exemple un véhicule automobile, présentant un dysfonctionnement.

Une première méthode consiste à consulter et à analyser des données de fonctionnement du véhicule collectées par exemple par un ordinateur de bord du véhicule.

Une deuxième méthode consiste à brancher un appareil de diagnostic externe à une prise de contrôle du véhicule. L'appareil relève des données de fonctionnement du véhicule et, à l'aide de ces données, effectue un diagnostic.

La première méthode peut être réalisée simplement par un utilisateur du véhicule, mais le diagnostic est rudimentaire et s'avère peu performant. La seconde méthode est plus performante mais plus complexe à mettre en oeuvre car elle nécessite généralement de faire appel à un réparateur spécialisé équipé de l'appareil de diagnostic.

Par le document WO 97/15009, on connaît un procédé de diagnostic d'un équipement à contrôler dans lequel un module de communication, associé à l'équipement à contrôler, relève des données de fonctionnement de l'équipement à contrôler et les retransmet vers un serveur distant, et le serveur distant effectue un diagnostic sur la base des données de fonctionnement reçues.

L'opération de diagnostic est déclenchée localement par le module de communication et exécutée par le serveur distant. L'utilisateur n'a donc pas systématiquement besoin de se déplacer auprès d'un réparateur. Un tel procédé permet donc à l'utilisateur d'obtenir simplement le diagnostic de son équipement.

La présente invention vise à améliorer encore ce procédé de diagnostic afin de l'appliquer à différents ensembles d'équipements, par exemple à des véhicules automobiles fabriqués par différents constructeurs.

A cet effet, l'invention concerne un procédé de diagnostic d'un équipement à contrôler dans lequel un module de communication, associé à l'équipement à contrôler, relève des données de fonctionnement de l'équipement à contrôler et les retransmet vers un serveur distant, et le serveur distant effectue un diagnostic sur la base des données de fonctionnement reçues, caractérisé par le fait que
- un serveur intermédiaire détermine, parmi une pluralité de serveurs d'assistance spécialisés, quel est le serveur adapté à l'équipement et met en relation le module de communication et le serveur d'assistance spécialisé adapté à l'équipement,
- le module de communication transmet les données de fonctionnement de l'équipement au serveur d'assistance spécialisé qui effectue le diagnostic.

Chaque serveur d'assistance spécialisé est apte à effectuer des diagnostics pour un ensemble d'équipements prédéfini, par exemple pour tous les véhicules d'un même constructeur automobile. L'aiguillage du module de communication vers le serveur d'assistance spécialisé adapté à son équipement est réalisé de façon centralisée par le serveur intermédiaire. Le module de communication peut ainsi obtenir simplement un diagnostic perfectionné à distance.

De préférence, il est prévu une étape de réglage au cours de laquelle le serveur distant transmet vers l'équipement, par l'intermédiaire du module de communication, des commandes de réglage pour réparer l'équipement.

Grâce à cela, l'équipement peut être réparé à distance par le serveur.

Le module de communication peut également relever une caractéristique distinctive d'au moins un élément de l'équipement, par exemple le nom du constructeur ou le numéro de série d'une pièce de l'équipement ou de l'équipement lui-même, et la retransmettre vers le serveur distant. Une telle remontée d'informations vers le serveur distant permet de faciliter les opérations de rappel d'équipements que des constructeurs doivent lancer lorsqu'ils ont détecté un défaut de fabrication susceptible de concerner un ensemble d'équipements donné. Le numéro de série de l'équipement ou de la pièce transmis par le module de communication au serveur, pour reprendre cet exemple, permet au serveur de déterminer si l'équipement considéré est susceptible de présenter le défaut de fabrication.

L'invention concerne également un système de diagnostic d'un équipement à contrôler, pour la mise en oeuvre du procédé défini ci-dessus, comprenant un module de communication associé à l'équipement à contrôler et un serveur de diagnostic, reliés l'un à l'autre à travers un réseau de communication, le module de communication étant agencé pour émettre des données de fonctionnement de l'équipement vers le serveur et le serveur étant agencé pour effectuer un diagnostic sur la base des données de fonctionnement de l'équipement, caractérisé en ce qu'il est prévu une pluralité de serveurs d'assistance spécialisés aptes à effectuer des diagnostics et un serveur intermédiaire agencé pour déterminer, parmi la pluralité de serveurs d'assistance spécialisés, quel est le serveur adapté à l'équipement et pour mettre en relation le module de communication et ledit serveur d'assistance spécialisé adapté en vue de l'établissement d'un diagnostic relatif à l'équipement.

L'invention sera mieux comprise à l'aide de la description suivante d'un mode de réalisation particulier du procédé de diagnostic, du système de diagnostic, du module de communication et des serveurs de l'invention, en référence au dessin annexé sur lequel:
- la figure 1 représente un schéma du système de diagnostic ;
- la figure 2 représente un schéma bloc fonctionnel du serveur intermédiaire de la figure 1 ;
- la figure 3 représente un schéma bloc fonctionnel du module de communication de la figure 1 ;
- la figure 4 représente un schéma bloc fonctionnel du serveur d'assistance spécialisé et
- la figure 5 représente un schéma bloc fonctionnel d'un serveur boîte noire de la figure 1.

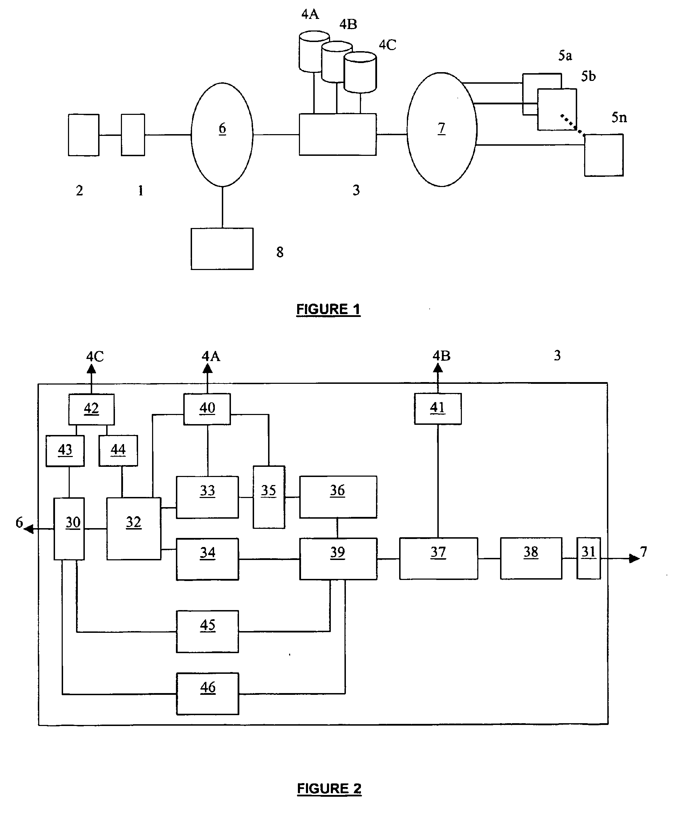

Sur la figure 1, on a représenté le système de diagnostic de l'invention comprenant un module de communication 1 associé à un équipement à contrôler 2, un serveur intermédiaire 3, associé à une base de données d'utilisateurs 4A, à une base de données 4B de serveurs d'assistance spécialisés et à une base de données 4C d'applications de diagnostic et d'applications de réglage, un serveur « boîte noire » 8 et une pluralité de serveurs d'assistance spécialisés 5a, 5b,..., 5n. Par souci de clarté, on a représenté un seul module de communication 1 et un seul équipement 2 associé. Toutefois, le système comprend de préférence une pluralité de modules de communication 1 associés chacun à un ou, de préférence, à plusieurs équipements 2. Sur la figure 1, on a en outre représenté un premier réseau de communication 6, ici un réseau cellulaire GSM, reliant le module de communication 1 au serveur intermédiaire 3 et au serveur « boîte noire » 8, et un second réseau de communication 7, ici un réseau privé, reliant le serveur intermédiaire 3 aux serveurs d'assistance spécialisés 5a, 5b,...,5n. Bien entendu, on pourrait utiliser d'autres réseaux de communication 6 et 7. Le réseau 6 pourrait, à titre d'exemple non limitatif, être un réseau ADSL, GPRS ou UMTS.

La base de données utilisateurs 4A contient, pour chaque utilisateur, un profil personnel d'utilisateur, auquel sont associés
- un profil de module de communication 1 et
- au moins un profil d'un équipement à contrôler 2.

Le profil personnel contient des données d'identification de l'utilisateur (nom, ou identifiant, et code confidentiel).

Le profil du module de communication 1 contient les caractéristiques de ce module de communication 1, classées ici dans les champs suivants: « type », « modèle », « paramètres » et « identifiant ». Le champ « type » indique la nature du module de communication 1. En l'espèce, le module de communication 1 comprenant un téléphone cellulaire GSM et un ordinateur de poche, ou « PocketPC », reliés l'un à l'autre, le champ « type » contient l'indication « téléphone GSM et PocketPC». Le champ « modèle » indique la marque et éventuellement la référence, ou le modèle, constructeur du module de communication. Le champ « paramètre » contient d'autres informations utiles sur le module de communication, telles que le numéro d'appel téléphonique du module de communication et les options supplémentaires du module de communication telles que par exemple l'option GPS. Le champ « identifiant » contient un identifiant attribué au module de communication 1, comprenant par exemple le numéro de téléphone ou des données liées à la carte SIM du module de communication 1

Le profil de l'équipement 2 contient les caractéristiques de cet équipement 2, classées dans des champs similaires à ceux du profil du module de communication 1, à savoir « type », « modèle », « paramètres » et « identifiant ». Dans l'exemple particulier de la description, l'équipement à contrôler 2 est un véhicule automobile, le champ « type » contient l'indication « véhicule automobile », le champ « modèle » indique la marque et le modèle constructeur du véhicule, par exemple « marque X, modèle Y » et le champ « paramètres » contient des informations utiles sur le véhicule telles que le numéro d'immatriculation, la date de première mise en circulation, etc.. En outre, le profil de l'équipement 2 contient un champ « niveau d'assistance » contenant un niveau d'assistance pour l'équipement 2, un champ « facturation » contenant le mode de facturation pour une intervention d'assistance sur l'équipement 2 et un champ « réparateur » contenant des données d'identification d'un réparateur. Le niveau d'assistance définit les conditions dans lesquelles l'utilisateur souhaite obtenir une assistance pour son équipement 2. Dans l'exemple particulier de la description, deux niveaux d'assistance A et B sont proposés. Le niveau d'assistance A offre une assistance ponctuelle, à la demande, en cas de besoin, et le niveau d'assistance B offre non seulement une assistance ponctuelle, à la demande, mais également une assistance régulière, suivie, par exemple une fois par mois. Le mode de facturation spécifie si l'utilisateur souhaite être facturé ici au forfait, à l'acte ou à la durée, pour les interventions d'assistance sur son équipement 2. Enfin, les données d'identification du réparateur contiennent le nom et les coordonnées (numéro d'appel téléphonique, adresse postale, etc.) d'un réparateur préféré de l'utilisateur pour l'équipement considéré 2.

La base de données 4B des serveurs d'assistance spécialisés contient, pour chaque serveur, toutes les informations nécessaires permettant de déterminer pour quels équipements ce serveur est compétent.

La base de données 4C contient des applications de diagnostic et des applications de réglage adaptées à différents équipements 2.

En référence à la figure 2, le serveur intermédiaire 3 comprend un bloc 30 de connexion au réseau 6, un bloc 31 de connexion au réseau 7, un bloc 40 d'accès à la base de données 4A, un bloc 41 d'accès à la base de données 4B et un bloc 42 d'accès à la base de données 4C. Une interface serveur / utilisateur 32 est interposée entre, d'une part, le bloc 30 de connexion au réseau 6 et, d'autre part, un bloc 33 de réception de requêtes de diagnostic et de données de fonctionnement d'équipements 2, un bloc 34 d'envoi d'informations destinées à des utilisateurs d'équipements 2 et un bloc 44 d'envoi d'applications de diagnostic et d'applications de réglages destinées à des modules de communication 1.

L'interface serveur / utilisateur 32 gère la communication entre le serveur 3 et chaque utilisateur. Le module 32 permet notamment à chaque utilisateur de s'inscrire auprès du serveur 3, de lui déclarer un module de communication 1 et un ou plusieurs équipements à contrôler 2 associés à ce module de communication 1 et de requérir une application de diagnostic et une application de réglage.

Les blocs 40-42 d'accès aux différentes bases de données 4A, 4B, 4C sont destinés à extraire, à enregistrer, à supprimer et/ou à modifier des informations contenues dans les bases de données 4A, 4B et 4C. Le bloc 42 d'accès à la base de données 4C est relié à un bloc 43 d'acquisition d'applications de diagnostic et d'applications de réglage, lui-même relié au bloc 30 de connexion au réseau 6, ainsi qu'à un bloc 44 d'envoi d'applications de diagnostic et d'applications de réglage vers des modules de communications 1, lui-même relié à l'interface serveur / utilisateur 32. Le bloc d'acquisition 43 est destiné à récupérer des applications de diagnostic et des applications de réglage d'équipements 2 auprès des serveurs de constructeurs non représentés afin de les enregistrer dans la base de données 4C. Le bloc d'envoi 44 est destiné à envoyer des applications de diagnostic et des applications de réglage vers les modules de communication 1. Le bloc 40 d'accès à la base de données 4A est relié à l'interface serveur / utilisateur 32.

Le serveur intermédiaire 3 comprend en outre un module de diagnostic 36 agencé pour effectuer des diagnostics sur la base de données de fonctionnement d'équipements 2 reçues par le bloc de réception 33.

Un module de commande 39 est interposé entre, d'une part, le module de diagnostic 36 et, d'autre part, un module de mise en relation 38, le module 34 d'envoi d'informations destinées à des utilisateurs, un module de réglage 45 et un module 46 d'envoi de requêtes de prise de contact vers des réparateurs. Le module de commande 39 est destiné, en fonction du résultat de chaque diagnostic, à commander différentes actions, qui seront explicitées ultérieurement dans la description du procédé. Les différentes cas sont les suivants:
i) le diagnostic a permis de détecter un dysfonctionnement pouvant être réparé à distance par le serveur 3,
ii) le diagnostic a permis de détecter un dysfonctionnement pouvant être réparé sur place par l'utilisateur,
iii) le diagnostic a permis de détecter un dysfonctionnement dont la réparation nécessite l'intervention d'un réparateur,
iv) le diagnostic a permis de détecter un dysfonctionnement pour lequel une réparation à distance est possible mais nécessite des capacités de réglage supérieures à celles du serveur 3 et
v) le diagnostic n'a permis de détecter aucun dysfonctionnement.

Le module de réglage 45, relié au bloc 30 de connexion au réseau 6, est destiné dans le cas i) à émettre vers un équipement à contrôler 2, par l'intermédiaire du module de communication 1, des commandes de réglage de l'équipement 2.

Le module d'envoi 34 est destiné à envoyer diverses informations à chaque utilisateur, en fonction du résultat du diagnostic, comme cela sera explicité dans la description du procédé. Ces informations peuvent notamment comprendre toutes les informations utiles pour permettre à un utilisateur de réparer son équipement 2 dans le cas ii), l'information selon laquelle la réparation de l'équipement 2 nécessite l'intervention d'un réparateur dans le cas iii) ou encore l'information selon laquelle il convient de mettre en relation le module de communication 1 et un serveur d'assistance spécialisé 5a, 5b,...,5n dans les cas iv) et v). Dans ces deux cas iv) et v), le bloc 39 est destiné à déclencher la mise en relation du module 1 et d'un serveur d'assistance spécialisé.

Le module d'envoi 46 est destiné, dans le cas iii), à envoyer une requête de prise de contact vers un réparateur, comme cela sera explicité dans la description du procédé.

Un module 37 de sélection d'un serveur d'assistance spécialisé 5a, 5b,..., 5n est interposé entre le module de commande 39 et le module de mise en relation 38. Ce module de sélection 37, relié au module de diagnostic 36 et au bloc 41 d'accès à la base de données 4B, est destiné à déterminer, parmi les serveurs d'assistance spécialisés 5a, 5b,...,5n, quel est le serveur d'assistance adapté à un équipement donné 2 et à sélectionner ce serveur en vue de la mise en relation du module de communication associé à l'équipement 2 et du serveur spécialisé sélectionné.

Le module de mise en relation 38, relié au module de sélection 37 et au bloc 31 de connexion au réseau 7, est destiné à mettre en relation un serveur d'assistance spécialisé 5a, 5b,...,5n et un module de communication 1, en vue de l'établissement d'un diagnostic par le serveur spécialisé 5a, 5b,...,5n ou du téléchargement d'une application de diagnostic ou de réglage du serveur spécialisé 5a, 5b,...,5n vers le module de communication 1.

Un module d'identification 35 est relié au bloc de réception 33, au module de diagnostic 36 et au bloc 40 d'accès à la base de données utilisateurs 4A. Ce bloc d'identification 35 est destiné, lors de la réception d'une requête de diagnostic, à identifier le module de communication 1 ayant émis cette requête et l'équipement 2 faisant l'objet de cette requête.

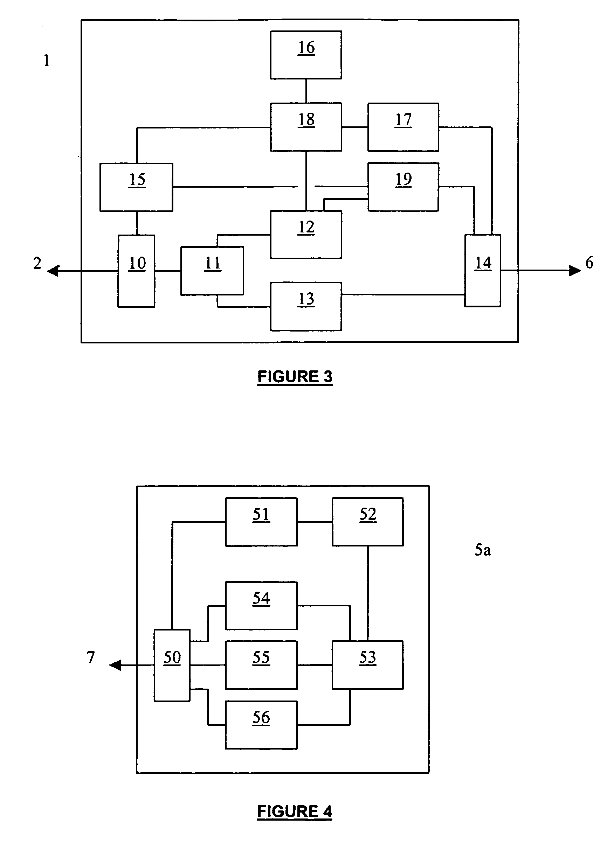

En référence à la figure 3, le module de communication 1, constitué ici d'un ordinateur de poche associé à un téléphone GSM, comprend un bloc 10 de connexion à un équipement 2, un bloc 14 de connexion au réseau 6, un bloc 11 de collecte de données de fonctionnement de l'équipement 2 et un bloc de diagnostic 12.

Le bloc de connexion 10 est destiné à relier le module de communication 1 à l'équipement 2, ici par une liaison BlueTooth. Toutefois, on pourrait prévoir tout autre type de liaison, radio ou filaire, entre le module de communication 1 et l'équipement 2.

Le bloc de collecte 11, relié au bloc de connexion 10 et au bloc de diagnostic 12, est destiné à relever des données de fonctionnement de l'équipement 2. La collecte et l'envoi des données de fonctionnement vers le serveur 3 peuvent être effectués « à la demande » ou en « automatique ». Le mode « à la demande » consiste à collecter et à envoyer vers le serveur 3 des données de fonctionnement relatives à l'équipement 2 en cas de besoin, à la demande de l'utilisateur, généralement lorsque l'équipement 2 présente un dysfonctionnement qui n'a pas pu être réparé localement par le module 1. Le mode « automatique » consiste à collecter et à envoyer vers le serveur 3 des données de fonctionnement relatives à l'équipement 2 de façon automatique et régulière pour une maintenance suivie de l'équipement 2. Dans le cas où le niveau d'assistance de l'équipement 2 est le niveau A, le module de communication 1 ne peut envoyer des données de fonctionnement de l'équipement 2 qu'en mode « à la demande », alors que, dans le cas où le niveau d'assistance est le niveau B, il peut envoyer des données de fonctionnement au serveur 3 non seulement selon en mode « à la demande », mais également en mode « automatique ».

Le bloc de diagnostic 12 comprend une application de diagnostic destinée à effectuer des diagnostics de l'équipement 2 sur la base des données de fonctionnement relevées par le bloc de collecte 11.

Un bloc de commande 18 est interposé entre, d'une part, le bloc de diagnostic 12 et, d'autre part, un bloc de réglage 15, un bloc 16 de notification d'informations à un utilisateur et un bloc 17 d'accès au serveur intermédiaire 3. Le bloc de commande 18 est destiné à commander différentes actions, en fonction du résultat de chaque diagnostic, comme cela sera explicité plus loin dans la description du procédé. Les différents cas envisageables sont analogues aux cas i) à v) précédemment évoqués, à savoir:
i') le diagnostic a permis de détecter un dysfonctionnement pouvant être réparé localement par le module 1,
ii') le diagnostic a permis de détecter un dysfonctionnement pouvant être réparé sur place par l'utilisateur,
iii') le diagnostic a permis de détecter un dysfonctionnement dont la réparation nécessite l'intervention d'un réparateur,
iv') le diagnostic a permis de détecter un dysfonctionnement pour lequel une réparation à distance est possible mais nécessite des capacités de réglage supérieures à celles du module 1 et
v') le diagnostic n'a permis de détecter aucun dysfonctionnement.

Le bloc de réglage 15 est destiné à émettre des commandes de réglage vers l'équipement 2 dans le cas i').

Le bloc 16 de notification d'informations est destiné à commander l'affichage de diverses informations, en fonction du résultat du diagnostic, comme cela sera explicité dans la description du procédé. Ces informations peuvent notamment comprendre toutes les informations utiles pour permettre à un utilisateur de réparer son équipement 2 dans le cas ii'), l'information selon laquelle la réparation de l'équipement 2 nécessite l'intervention d'un réparateur dans le cas iii') ou encore l'information selon laquelle il convient de mettre en relation le module de communication 1 et le serveur intermédiaire 3 dans les cas iv') et v'). Dans ces deux cas iv') et v'), le bloc 18 est destiné à déclencher la connexion du module 1 au serveur intermédiaire 3.

Le bloc 17 d'accès au serveur intermédiaire 3, relié au bloc 14 de connexion au réseau 6, est destiné à connecter le module 1 au serveur intermédiaire 3 et à envoyer des données, notamment des données de fonctionnement de l'équipement 2, vers le serveur intermédiaire 3.

Il est en outre prévu un bloc 19 d'acquisition d'applications interposé entre, d'une part, le bloc de connexion 14 et, d'autre part, le bloc de diagnostic 12 et le bloc de réglage 15, et destiné à récupérer des applications de diagnostic et des applications de réglage.

Un bloc « boîte noire » 13 est interposé entre le bloc de collecte 11 et le bloc 14 de connexion au réseau 6. Il est destiné à surveiller les données de fonctionnement de l'équipement 2 et à détecter tout événement d'urgence tel que, à titre d'exemples, un freinage brusque du véhicule 2 ou une augmentation importante de la température d'un circuit donné. En cas de détection d'un événement d'urgence, le bloc 13 est agencé pour commander les actions suivantes:
- la collecte immédiate d'un maximum de données relatives à l'équipement 2 ;
- la connexion prioritaire du module de communication 1 au serveur « boîte noire » 8 et
- l'envoi vers le serveur « boîte noire » 8 d'un flux de données véhiculant des données d'identification et des données relatives à l'équipement 2. Les données relatives à l'équipement 2 comprennent ici des données de fonctionnement de l'équipement 2. En variante, ces données pourraient également comprendre des données relatives à l'environnement de l'équipement 2 telles que, par exemple, dans le cas où l'équipement 2 est un véhicule automobile, des données de prises de vues d'une caméra située dans le véhicule 2 et surveillant la route à l'avant du véhicule 2.

Dans l'exemple particulier de la description, le module de communication 1 dispose d'un seul canal de transmission de données. Par connexion « prioritaire », on entend indiquer que, s'il est déjà en cours de communication avec un correspondant à travers ce canal de transmission, le module de communication 1 interrompt automatiquement cette communication et se connecte au serveur 3 par le canal de transmission. Dans le cas le module de communication 1 possèderait plusieurs canaux de transmission de données, la connexion prioritaire consisterait à utiliser le maximum de canaux de transmission disponibles pour transmettre les données relatives à l'équipement 2.

L'ordinateur de poche du module 1 intègre les blocs 10-13 et 15-19 et le téléphone cellulaire du module 1 est représenté par le bloc 14.

Le module de communication 1 comprend en outre une interface homme-machine, non représentée, comportant un écran, un clavier et une boule de commande (« trackball »). L'écran peut être tactile et la boule de commande peut être remplacée par une dalle sensitive.

Le module de communication 1 pourrait comprendre plusieurs applications de diagnostic, ou de réglage, respectivement aptes à effectuer des diagnostics, ou des réglages, pour différents équipements 2.

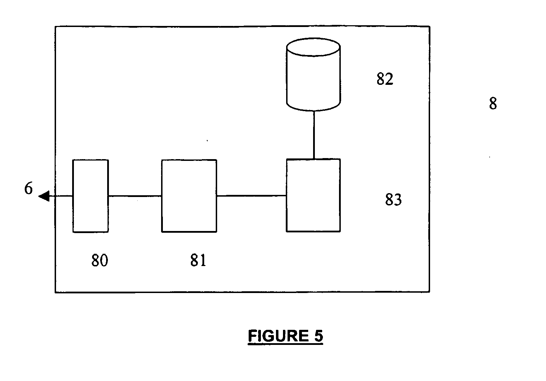

En référence à la figure 4, chaque serveur d'assistance spécialisé 5a, ..., 5n comprend un bloc 50 de connexion au réseau 7, une interface 51 serveur spécialisé 5a, ..., 5n / serveur intermédiaire 3 (ou module de communication 1) et un module de diagnostic 52.

L'interface 51, reliée au bloc 50 de connexion au réseau 7, est destinée à gérer la communication entre le serveur spécialisé 5a, ..., 5n et le serveur intermédiaire 3, ou le module de communication 1.

Le module de diagnostic 52 est destiné à recevoir des données de fonctionnement d'équipements 2, par l'intermédiaire de l'interface 51, et à établir des diagnostics d'équipements 2 sur la base de ces données de fonctionnement.

Un module de commande 53 est interposé entre, d'une part, le module de diagnostic 52 et, d'autre part, un module de réglage 54, un module 55 d'envoi d'informations destinées à des utilisateurs et un module 56 d'envoi de requêtes de prise de contact. Ce module de commandes 53 est destiné à déclencher différentes actions selon le résultat de chaque diagnostic, comme cela sera explicité dans la description du procédé. Les différents cas envisageables sont analogues aux cas i), ii) iii) et v) précédemment évoqués, à savoir:
i") le diagnostic a permis de détecter un dysfonctionnement pouvant être réparé à distance par le serveur spécialisé 5a, ..., 5n,
ii") le diagnostic a permis de détecter un dysfonctionnement pouvant être réparé sur place par l'utilisateur,
iii") le diagnostic a permis de détecter un dysfonctionnement dont la réparation nécessite l'intervention d'un réparateur,
iv') le diagnostic n'a permis de détecter aucun dysfonctionnement.

Le module de réglage 54 est destiné à émettre des commandes de réglage vers l'équipement 2 par l'intermédiaire du module de communication 1 dans le cas i").

Le module d'envoi 55 est destiné à envoyer vers chaque module de communication 1 diverses informations destinées à un utilisateur, en fonction du résultat du diagnostic, comme cela sera explicité dans la description du procédé. Ces informations peuvent notamment comprendre toutes les informations utiles pour permettre à l'utilisateur de réparer son équipement 2 dans le cas ii") ou l'information selon laquelle la réparation de l'équipement 2 nécessite l'intervention d'un réparateur dans les cas iii") et iv"). Dans ces deux cas iii") et iv"), le module d'envoi 56 est destiné à envoyer une requête de prise de contact vers un réparateur, comme cela sera explicité dans la description du procédé.

Le serveur d'assistance spécialisé 5a, ..., 5n pourraient également comprendre des moyens pour envoyer des applications de diagnostic et des applications de réglage vers les modules de communication 1.

En référence à la figure 5, le serveur « boîte noire » 8 comprend un module 80 de connexion au réseau 6, un module 81 de réception de données relatives à des équipements 2, une base de données 82 et un module d'enregistrement 83. En cas de détection d'un événement d'urgence concernant un équipement 2 par le module de communication 1 associé, celui-ci transmet au serveur « boîte noire » 8 un flux de données véhiculant des données d'identification et des données relatives à l'équipement 2. Le module 81 reçoit ces données et le module 83 les enregistre dans la base de données 82 en y associant une information temporelle, en l'espèce la date et l'heure de réception de ces données.

Le procédé de diagnostic d'un équipement à contrôler 2 va maintenant être décrit. On rappelle que, dans l'exemple particulier de la description, l'équipement 2 est un véhicule automobile.

Dans une étape préalable d'inscription, l'utilisateur du module de communication 1 s'inscrit auprès du serveur 3, ici à partir du module de communication 1. Toutefois, cette inscription pourrait être effectuée à partir de n'importe quel terminal de communication. Lors de cette étape, l'utilisateur déclare au serveur 3 l'équipement à contrôler 2 et le module de communication 1 et lui transmet toutes les caractéristiques utiles de l'équipement 2 et du module de communication 1. Le serveur intermédiaire 3 associe un profil personnel à l'utilisateur. En outre, un profil d'équipement et un profil de module de communication sont respectivement associés à l'équipement 2 et au module de communication 1. Le profil personnel de l'utilisateur contient des données d'identification de l'utilisateur, à savoir ici un nom et un code confidentiel. Les caractéristiques de l'équipement 2 et du module de communication 1 sont classées dans les différents champs précédemment décrits. Dans l'exemple particulier de la description, le profil de l'équipement 2 contient
- dans le champ « type »: l'indication selon laquelle l'équipement 2 est un véhicule automobile ;
- dans le champ « modèle » : la marque et le modèle constructeur du véhicule,
- dans le champ « paramètres » : le numéro d'immatriculation et la date de première mise en circulation du véhicule ;
- dans le champ « niveau d'assistance » : le niveau d'assistance choisi, ici le niveau A,
- dans le champ « facturation » : le mode de facturation, ici à l'acte, et
- dans le champ « identifiant » : un identifiant attribué par le serveur 3 à l'équipement 2.

Le profil du module de communication 1 contient
- dans le champ « type »: la nature du module de communication 1, ici un ordinateur de poche associé à un téléphone cellulaire ;
- dans le champ « modèle » : la marque et le modèle constructeur de l'ordinateur de poche et du téléphone cellulaire ;
- dans le champ « paramètres » : le numéro d'appel téléphonique du téléphone cellulaire et
- dans le champ « identifiant » : un identifiant attribué par le serveur 3 au module de communication 1.

L'identifiant de l'équipement 2 et l'identifiant du module de communication 1, tous deux communiqués au module de communication 1, permettent d'identifier de manière unique l'équipement 2 et le module de communication 1. Le serveur 3 enregistre le profil du module de communication 1 et le profil de l'équipement 2 dans la base de données utilisateurs 4A en les associant au profil personnel de l'utilisateur.

Sur requête du module de communication 1, le serveur intermédiaire 3 extrait de la base de données 4C une application de diagnostic et une application de réglage adaptées à l'équipement 2 et les transmet au module de communication 1.

On va maintenant décrire plus précisément une opération de diagnostic et de réparation de l'équipement 2.

Il est prévu trois niveaux I, II et III de diagnostic et de réglage ou, à défaut de réglage, de notification d'informations, respectivement destinées à être mises en oeuvre, l'un après l'autre, par le module de communication 1, par le serveur intermédiaire 3 et par un serveur d'assistance spécialisé 5a, ..., 5n. A chaque niveau N, un diagnostic est effectué. Suivant les résultats de ce diagnostic, une intervention d'assistance est déclenchée au niveau N ou il est fait appel au niveau N+I pour effectuer un diagnostic plus pointu. L'intervention d'assistance consiste, selon le cas, à envoyer vers l'équipement 2 des commandes de réglage, à informer l'utilisateur du fait que la réparation nécessite l'intervention d'un réparateur ou à fournir à l'utilisateur toutes les informations utiles pour réparer lui-même le dysfonctionnement. Les différents niveaux I, II et III vont maintenant être décrits.

### Niveau I

Sous la commande de l'utilisateur, le module de communication 1 collecte des données de fonctionnement de l'équipement 2 et effectue un diagnostic local à l'aide de ces données.

Si le module 1 détecte un dysfonctionnement pouvant être réparé localement (cas i')), il envoie des commandes de réglage vers l'équipement 2. Ces commandes de réglage permettent de régler certains paramètres de fonctionnement du véhicule ou éventuellement d'activer un circuit de secours destiné à remplacer un circuit défectueux.

Si le module 1 détecte un dysfonctionnement pouvant être réparé par l'utilisateur (cas ii')), il affiche toutes les informations utiles pour permettre à l'utilisateur de réparer lui-même le véhicule.

Si le module 1 détecte un dysfonctionnement nécessitant l'intervention d'un réparateur (cas iii')), il affiche l'information selon laquelle la réparation du dysfonctionnement nécessite l'intervention d'un réparateur.

Si le module 1 n'a pas les capacités de réglage suffisantes pour réparer le dysfonctionnement (cas iv')) ou s'il ne détecte aucun dysfonctionnement (cas v')), le module de communication 1 affiche l'information selon laquelle il est nécessaire de faire appel à un serveur distant ayant des capacités de diagnostic et de réglage supérieures à celles du module 1.

Dans les deux derniers cas iv') et v'), le module de communication 1 se connecte au serveur intermédiaire 3, éventuellement après acceptation par l'utilisateur, collecte des données de fonctionnement de l'équipement 2 et les envoie vers le serveur 3, avec une requête de diagnostic contenant:
- les données d'identification de l'utilisateur ;
- les identifiants du module de communication 1 et de l'équipement 2 ;
- l'indication selon laquelle un diagnostic est requis pour l'équipement 2 ;
- et ici, des informations de localisation de l'équipement 2.

### Niveau II

Le serveur intermédiaire 3 vérifie la validité des données d'identification de l'utilisateur et extrait les profils de l'équipement 2 et du module de communication 1 de la base de données 4A, à l'aide de leurs identifiants respectifs. Si les données d'identification de l'utilisateur sont correctes, le serveur 3 effectue un diagnostic de l'équipement 2 sur la base des données de fonctionnement reçues. En fonction des résultats de ce diagnostic, le serveur 3 déclenche différentes interventions.

Si le serveur 3 détecte un dysfonctionnement pouvant être réparé à distance (cas i)), il envoie des commandes de réglage vers l'équipement 2, par l'intermédiaire du module de communication 1, à travers le réseau 6. Ces commandes de réglage permettent de régler certains paramètres de fonctionnement de l'équipement 2 ou d'activer un circuit de secours à la place d'un circuit défectueux. Parallèlement, le serveur 3 envoie au module de communication 1 des informations sur la nature du dysfonctionnement et l'indication selon laquelle la réparation du dysfonctionnement a été effectuée à distance et le module 1 affiche ces informations.

Si le serveur 3 détecte un dysfonctionnement pouvant être réparé par l'utilisateur (cas ii)), il envoie au module de communication 1 toutes les informations utiles pour permettre à l'utilisateur de réparer lui-même l'équipement 2 et le module de communication 1 affiche ces informations.

Si le serveur 3 détecte un dysfonctionnement nécessitant l'intervention d'un réparateur (cas iii)), il envoie au module de communication 1 l'information selon laquelle la réparation du dysfonctionnement nécessite l'intervention d'un réparateur et le module de communication 1 affiche cette information.

Si le serveur 3 n'a pas les capacités de réglage suffisantes pour réparer le dysfonctionnement détecté (cas iv)) ou s'il ne détecte aucun dysfonctionnement (cas v)), le serveur 3 transmet au module de communication 1 l'information selon laquelle il est nécessaire de faire appel à un serveur d'assistance spécialisé 5a, ..., 5n ayant des capacités de diagnostic et de réglage supérieures à celles du serveur 3 et le module de communication 1 affiche cette information. Le serveur intermédiaire 3 invite éventuellement l'utilisateur à confirmer qu'il accepte la mise en relation du module de communication 1 et d'un serveur d'assistance spécialisé 5a, ..., 5n.

Sur la base du profil de l'équipement 2, le serveur 3 détermine, parmi la pluralité de serveurs d'assistance spécialisés 5a, ..., 5n, quel le serveur adapté à l'équipement 2, c'est-à-dire compétent pour effectuer un diagnostic de l'équipement 2. En l'espèce, le serveur d'assistance spécialisé adapté à l'équipement 2 est le serveur 5a. Le serveur intermédiaire 3 met ensuite en relation le module de communication 1 et serveur d'assistance spécialisé 5a. Le serveur 3 retransmet vers le serveur d'assistance 5a les données de fonctionnement de l'équipement 2. En d'autres termes, les données de fonctionnement de l'équipement 2 sont transmises du module de communication 1 au serveur spécialisé 5a par l'intermédiaire du serveur 3. On pourrait également envisager que le module de communication 1 transmette directement les données de fonctionnement de l'équipement 2 au serveur 5a, après mise en relation.

### Niveau III

Le serveur spécialisé 5a effectue un diagnostic de l'équipement 2, sur la base des données de fonctionnement reçues.

Si le serveur 5a détecte un dysfonctionnement pouvant être réparé à distance (cas i")), il envoie des commandes de réglage vers l'équipement 2, par l'intermédiaire du module de communication 1, à travers les réseaux 6 et 7. Ces commandes de réglage permettent de régler certains paramètres de fonctionnement de l'équipement 2 ou d'activer un circuit de secours à la place d'un circuit défectueux. Parallèlement, le serveur spécialisé 5a envoie au module de communication 1 des informations sur le dysfonctionnement détecté et l'information selon laquelle le dysfonctionnement a été réparé à distance. Le module de communication 1 affiche ces informations.

Si le serveur 5a détecte un dysfonctionnement pouvant être réparé par l'utilisateur (cas ii")), il envoie au module de communication 1 toutes les informations utiles pour permettre à l'utilisateur de réparer lui-même l'équipement 2 et le module de communication 1 affiche ces informations.

Si le serveur 5a détecte un dysfonctionnement nécessitant l'intervention d'un réparateur (cas iii")), il envoie au module de communication 1 l'information selon laquelle la réparation du dysfonctionnement nécessite l'intervention d'un réparateur et le module de communication 1 affiche cette information.

Si le serveur 5a n'a pas les capacités de réglage suffisantes pour réparer le dysfonctionnement détecté (cas iv")) ou s'il ne détecte aucun dysfonctionnement (cas v")), le serveur 5a transmet au module de communication 1 l'information selon laquelle il est nécessaire de faire appel à un réparateur et le module de communication 1 affiche cette information.

Dans le cas où un dysfonctionnement nécessitant l'intervention d'un réparateur est détecté au niveau II par le serveur intermédiaire 3 ou au niveau III par le serveur spécialisé 5a, le serveur considéré (3 ou 5a) adresse à un réparateur une requête de prise de contact contenant des données d'identification de l'utilisateur de l'équipement 2, l'adresse du module de communication 1 sur le réseau 6 (à savoir le numéro d'appel téléphonique cellulaire du module de communication 1) et des informations relatives au dysfonctionnement. Le réparateur est soit celui figurant dans le profil de l'équipement 2, soit le réparateur le plus proche de l'équipement 2, selon la gravité du dysfonctionnement. Après avoir reçu la requête, le réparateur prend contact avec l'utilisateur, à travers le réseau 6, afin de convenir d'un rendez-vous. Le serveur considéré (3 ou 5a) pourrait n'envoyer cette requête de prise de contact au réparateur qu'après acceptation par l'utilisateur. En variante, on pourrait envisager que le serveur considéré (3 ou 5a) envoie au module de communication 1 le numéro de téléphone du réparateur sélectionné.

Dans le cas où la gravité du dysfonctionnement détecté à l'un des niveaux I, II, III rend l'utilisation de l'équipement 2 dangereuse, le module de communication 1 affiche un message d'alerte destiné à avertir l'utilisateur. Si ce dysfonctionnement est détecté au niveau II ou III, le message d'alerte est préalablement transmis par le serveur intermédiaire 3 ou par le serveur spécialisé 5a, ..., 5n au module de communication 1 pour être affiché par celui-ci.

Les différentes opérations exécutées par le serveur 3 et par le serveur d'assistance spécialisé 5a sont facturées de façon centralisée par le serveur intermédiaire 3, selon le mode de facturation choisi pour l'équipement 2. Si l'abonnement d'un utilisateur ne lui permet pas d'accéder aux services fournis par les serveurs d'assistance spécialisés, il peut néanmoins y accéder ponctuellement, moyennant paiement.

D'autre part, le module de communication 1 surveille en permanence les données de fonctionnement de l'équipement 2. Sur détection d'un événement d'urgence concernant l'équipement 2, par exemple en cas de détection d'une augmentation importante d'un circuit donné ou d'un freinage brusque, le module de communication 1 se connecte de façon prioritaire au serveur « boîte noire » 8, collecte un maximum de données de fonctionnement de l'équipement 2 et transmet au serveur 8 un flux de données véhiculant l'identifiant et les données de fonctionnement de l'équipement 2. Le serveur 8 enregistre l'identifiant et les données de fonctionnement de l'équipement 2 en y associant l'heure et la date de réception de ces données. Le module de communication 1 pourrait authentifier les données transmises au serveur « boîte noire » en cryptant ces données à l'aide d'un algorithme d'authentification.

Dans le cas d'une maintenance suivie de l'équipement 2, le module de communication 1 envoie régulièrement, de façon automatique, une requête de diagnostic au serveur intermédiaire 3. En variante, le serveur intermédiaire 3 pourrait effectuer lui-même des télé-relevés des données de fonctionnement de l'équipement 2 en appelant régulièrement le module de communication 1.

L'équipement 2 pourrait être un véhicule de secours, par exemple une ambulance intégrant des appareils de surveillance médicale reliés à un module de communication 1. Dans ce cas, le serveur intermédiaire 3 gère, de façon centralisée, l'aiguillage d'une flotte de véhicules de secours vers différents centres de secours, tels que ces centres hospitaliers, et la mise en relation des modules de communication 1 des véhicules de secours et de serveurs d'assistance spécialisés 5a, 5b,..., 5n respectivement associés aux différents centres de secours de destination. Dans l'exemple de l'ambulance transportant un patient, le module de communication 1 collecte des données de fonctionnement fournies par les appareils de surveillance médicale, correspondant à des données vitales du patient et transmet ces données au serveur spécialisé 5a, 5b,...,5n. Celui-ci peut ainsi suivre à distance l'état du patient présent dans l'ambulance et effectuer des diagnostics sur le patient et éventuellement fournir à l'ambulance une assistance médicale par l'envoi d'informations au module de communication 1.

Le serveur « boîte noire » 8 pourrait être intégré dans le serveur intermédiaire 3.

La communication entre le module de communication 1 et le serveur intermédiaire 3, ou un serveur spécialisé 5a, 5b,..., 5n, peut être écrite et/ou vocale.

Dans la description qui vient d'être faite, le module de communication 1 récupère directement l'application de diagnostic et l'application de réglage adaptées à l'équipement à contrôler 2. L'utilisateur pourrait également récupérer ces applications sur un autre dispositif, tel qu'un ordinateur PC, et les charger ensuite dans le module de communication 1 à partir du dispositif.

Dans la description qui précède, un diagnostic complet est effectué à chaque niveau I, II et III. En variante, pour des raisons de rapidité, lorsqu'un diagnostic a déjà été effectué au niveau N, le diagnostic effectué au niveau N+I pourrait être seulement un diagnostic complémentaire.

La fonction « ordinateur de poche » et la fonction de connexion au réseau de communication 6 du module de communication 1 pourraient être intégrées dans un même dispositif, par exemple un ordinateur de poche intégrant la fonction UMTS.

Le module de communication 1 pourrait également être intégré dans l'équipement 2. Pour reprendre l'exemple du véhicule automobile 2, le module de communication 1 pourrait être intégré à l'ordinateur de bord du véhicule 2.

On rappelle que le module de communication 1 peut être associé à différents équipements 2.

Dans la description qui précède, le module de communication 1 relève des données de fonctionnement de l'équipement 2 et les retransmet vers un serveur distant 3 ou 5a, ..., 5n en vue de l'établissement d'un diagnostic. En variante, le module de communication peut également relever une ou plusieurs caractéristique(s) distinctive(s) relative à un élément de l'équipement ou à l'équipement lui-même et retransmettre cette, ou ces, caractéristique(s) vers le serveur distant 3 ou 5a, ..., 5n. Comme caractéristiques distinctives, on peut citer, à titre d'exemples non limitatifs, le nom du constructeur ou le numéro de série d'une pièce de l'équipement 2 (par exemple le numéro de série la boîte de vitesse d'un véhicule automobile) ou de l'équipement 2 lui-même. Lorsqu'un constructeur a détecté un défaut de fabrication susceptible de concerner un ensemble d'équipements, le serveur intermédiaire 3 ou le serveur spécialisé 5a, ..., 5n détermine quels sont les équipements d'un parc d'équipements donné susceptibles d'être affectés par ce défaut de fabrication grâce à la remontée des caractéristiques distinctives d'éléments des équipements 2 ou des équipements 2 eux-mêmes du parc considéré. Le serveur 3 ou 5a, ..., 5n peut ensuite facilement alerter les utilisateurs de ces équipements, par l'envoi de messages d'alerte vers les modules de communication 1 associés, et leur demander d'apporter les équipements auprès des constructeurs ou de réparateurs en vue d'une réparation ou d'un échange.

## Revendications

1. Procédé de diagnostic d'un équipement à contrôler (2) dans lequel un module de communication (1), associé à l'équipement à contrôler (2), relève des données de fonctionnement de l'équipement à contrôler (2) et les retransmet vers un serveur distant (3, 5a, 5b,..., 5n), et le serveur distant (3, 5a, 5b,..., 5n) effectue un diagnostic sur la base des données de fonctionnement reçues, **caractérisé par le fait que**
- un serveur intermédiaire (3) détermine, parmi une pluralité de serveurs d'assistance spécialisés (5a, 5b,..., 5n), quel est le serveur adapté à l'équipement (2) et met en relation le module de communication (1) et le serveur d'assistance spécialisé (5a, 5b,..., 5n) adapté à l'équipement (2),
- le module de communication (1) transmet les données de fonctionnement de l'équipement (2) au serveur d'assistance spécialisé qui effectue le diagnostic.

2. Procédé selon la revendication 1, dans lequel il est prévu une étape de réglage au cours de laquelle le serveur distant (3, 5a, 5b,..., 5n) transmet vers l'équipement (2), par l'intermédiaire du module de communication (1), des commandes de réglage pour réparer l'équipement (2).

3. Procédé selon l'une des revendications 1 et 2, dans lequel il est prévu une étape de diagnostic local effectué par le module de communication (1) suivie, dans le cas où l'équipement (2) peut être réparé par le module de communication (1), d'une étape de réglage au cours de laquelle le module de communication (1) transmet des commandes de réglage vers l'équipement (2).

4. Procédé selon l'une des revendications 2 et 3, dans lequel, dans le cas où l'équipement (2) ne peut pas être réparé par le module de communication (1), il est prévu une étape de notification d'informations au cours de laquelle le module de communication (1) fournit à un utilisateur soit des informations pour lui permettre de réparer lui-même le dysfonctionnement, soit l'information selon laquelle la réparation du dysfonctionnement nécessite l'intervention d'un réparateur.

5. Procédé selon la revendication 4, dans lequel il est prévu trois niveaux de diagnostic et de réglage ou, à défaut de réglage, de notification d'informations, respectivement destinés à être mis en oeuvre l'un après l'autre par le module de communication (1), par le serveur intermédiaire (3) et par le serveur d'assistance spécialisé (5a, ..., 5n) de telle manière que, après avoir effectué un diagnostic au niveau N, on effectue un autre diagnostic au niveau supérieur N+I si aucune des deux étapes de réglage et de notification d'informations n'est exécutée au niveau N.

6. Procédé selon l'une des revendications 1 à 5, dans lequel, sur détection d'un événement d'urgence concernant l'équipement à contrôler (2), le module de communication (1) se connecte de façon prioritaire à un serveur « boîte noire » (8) et lui transmet des données relatives à l'équipement à contrôler (2).

7. Procédé selon l'une des revendications 1 à 6, dans lequel le module de communication relève une caractéristique distinctive d'au moins un élément de l'équipement et la retransmet vers le serveur distant.

8. Système de diagnostic d'un équipement à contrôler, pour la mise en oeuvre du procédé de la revendication 1, comprenant un module de communication (1) associé à l'équipement à contrôler (2) et un serveur de diagnostic (3, 5a, 5b,..., 5n), reliés l'un à l'autre à travers un réseau de communication (6, 7), le module de communication (1) étant agencé pour émettre des données de fonctionnement de l'équipement (2) vers le serveur (3, 5a, 5b, ..., 5n) et le serveur (3, 5a, 5b,..., 5n) étant agencé pour effectuer un diagnostic sur la base des données de fonctionnement de l'équipement (2), **caractérisé en ce qu'**il est prévu une pluralité de serveurs d'assistance spécialisés (5a, 5b,..., 5n) aptes à effectuer des diagnostics et un serveur intermédiaire (3) agencé pour déterminer, parmi la pluralité de serveurs d'assistance spécialisés (5a, 5b,..., 5n), quel est le serveur adapté à l'équipement (2) et pour mettre en relation le module de communication (1) et ledit serveur d'assistance spécialisé adapté en vue de l'établissement d'un diagnostic relatif à l'équipement (2).

9. Système selon la revendication 8, dans lequel, l'équipement à contrôler étant un véhicule de secours, le serveur intermédiaire (3) est agencé pour aiguiller le véhicule de secours vers un centre de secours auquel est associé le serveur d'assistance spécialisé adapté à l'équipement (2) et, le véhicule de secours intégrant au moins un appareil de surveillance médicale d'un patient, relié au module de communication (1), le module de communication (1) est agencé pour collecter des données de fonctionnement fournies par l'appareil de surveillance médicale, correspondant à des données vitales du patient, et pour transmettre ces données audit serveur spécialisé (5a, 5b,...,5n) et ledit serveur spécialisé (5a, 5b,...,5n) est agencé pour suivre à distance l'état du patient.

## Claims

1. Diagnostic method for equipment to be checked (2) in which a communication module (1), associated with the equipment to be checked (2), records operating data of the equipment to be checked (2) and retransmits it to a remote server (3, 5a, 5b, ..., 5n), and the remote server (3, 5a, 5b, ..., 5n) performs a diagnostic routine on the basis of the operating data received, **characterized in that**
- an intermediate server (3) determines, from a plurality of dedicated assistance servers (5a, 5b, ..., 5n), which is the server suited to the equipment (2) and puts in communication the communication module (1) and the dedicated assistance server (5a, 5b, ..., 5n) suited to the equipment (2),
- the communication module (1) transmits the operating data of the equipment (2) to the dedicated assistance server which performs the diagnostic routine.

2. Method according to Claim 1, in which is provided a setting step during which the remote server (3, 5a, 5b, ..., 5n) transmits to the equipment (2), via the communication module (1), setting commands to repair the equipment (2).

3. Method according to one of Claims 1 and 2, in which there is provided a local diagnostic step performed by the communication module (1) followed, in the case where the equipment (2) can be repaired by the communication module (1), by a setting step during which the communication module (1) transmits setting commands to the equipment (2).

4. Method according to one of Claims 2 and 3, in which, in the case where the equipment (2) cannot be repaired by the communication module (1), there is provided an information notification step during which the communication module (1) supplies a user either with information enabling him to repair the malfunction himself, or with information according to which the repair of the malfunction requires the intervention of a repairer.

5. Method according to Claim 4, in which there are provided three diagnostic and setting or, failing setting, information notification levels, respectively intended to be implemented one after the other by the communication module (1), by the intermediate server (3) and by the dedicated assistance server (5a, ..., 5n) so that, after having performed a diagnostic routine at level N, another diagnostic routine is performed at the higher level N+I if none of the two setting and information notification steps is executed at the level N.

6. Method according to one of Claims 1 to 5, in which, on detection of an emergency event concerning the equipment to be checked (2), the communication module (1) connects as a priority to a "black box" server (8) and transmits to it data relating to the equipment to be checked (2).

7. Method according to one of Claims 1 to 6, in which the communication module records a distinctive characteristic of at least one element of the equipment and retransmits it to the remote server.

8. Diagnostic system for equipment to be checked, for implementing the method of Claim 1, comprising a communication module (1) associated with the equipment to be checked (2) and a diagnostic server (3, 5a, 5b, ..., 5n), linked to each other via a communication network (6, 7), the communication module (1) being arranged to send operating data of the equipment (2) to the server (3, 5a, 5b, ..., 5n) and the server (3, 5a, 5b, ..., 5n) being arranged to perform a diagnostic routine on the basis of the operating data of the equipment (2), **characterized in that** there are provided a plurality of dedicated assistance servers (5a, 5b, ..., 5n) suitable for performing diagnostic routines and an intermediate server (3) arranged to determine, from the plurality of dedicated assistance servers (5a, 5b, ..., 5n), which is the server suited to the equipment (2) and to put in communication the communication module (1) and said dedicated assistance server suited to the creation of a diagnostic report concerning the equipment (2).

9. System according to Claim 8, in which, the equipment to be checked being an emergency vehicle, the intermediate server (3) is arranged to switch the emergency vehicle to an emergency centre with which is associated the dedicated assistance server suited to the equipment (2) and, the emergency vehicle incorporating at least one apparatus for monitoring a patient's medical condition, linked to the communication module (1), the communication module (1) is arranged to collect operating data supplied by the medical monitoring apparatus, corresponding to the patient's vital signs, and to transmit this data to said dedicated server (5a, 5b, ..., 5n) and said dedicated server (5a, 5b, ..., 5n) is arranged to remotely monitor the condition of the patient.

## Patentansprüche

1. Verfahren zur Diagnose einer zu prüfenden Einrichtung (2), bei dem ein Kommunikationsmodul (1), der der zu prüfenden Einrichtung (2) zugeordnet ist, Betriebsdaten der zu prüfenden Einrichtung (2) erfasst und sie an einen fernen Server (3, 5a, 5b, ..., 5n) weiterleitet, und der ferne Server (3, 5a, 5b, ..., 5n) eine Diagnose auf der Basis der empfangenen Betriebsdaten durchführt, **dadurch gekennzeichnet, dass**
- ein Zwischenserver (3) unter mehreren spezialisierten Hilfsservern (5a, 5b, ..., 5n) bestimmt, welches der für die Einrichtung (2) geeignete Server ist, und den Kommunikationsmodul (1) und den für die Einrichtung (2) geeigneten spezialisierten Hilfsserver (5a, 5b, ..., 5n) miteinander verbindet,
- der Kommunikationsmodul (1) die Betriebsdaten der Einrichtung (2) an den spezialisierten Hilfsserver sendet, der die Diagnose durchführt.

2. Verfahren nach Anspruch 1, bei dem ein Regelungsschritt vorgesehen ist, während dem der ferne Server (3, 5a, 5b, ..., 5n) über den Kommunikationsmodul (1) Regelungsbefehle an die Einrichtung (2) überträgt, um die Einrichtung (2) zu reparieren.

3. Verfahren nach einem der Ansprüche 1 und 2, bei dem ein lokaler Diagnoseschritt vorgesehen ist, der vom Kommunikationsmodul (1) durchgeführt wird, auf den in dem Fall, in dem die Einrichtung (2) vom Kommunikationsmodul (1) repariert werden kann, ein Regelungsschritt folgt, während dem der Kommunikationsmodul (1) Regelungsbefehle an die Einrichtung (2) überträgt.

4. Verfahren nach einem der Ansprüche 2 und 3, bei dem in dem Fall, in dem die Einrichtung (2) nicht vom Kommunikationsmodul (1) repariert werden kann, ein Schritt der Mitteilung von Informationen vorgesehen ist, während dem der Kommunikationsmodul (1) einem Benutzer entweder Informationen liefert, um es ihm zu ermöglichen, die Funktionsstörung selbst zu reparieren, oder die Information liefert, gemäß der die Reparatur der Funktionsstörung das Eingreifen eines Reparateurs erfordert.

5. Verfahren nach Anspruch 4, bei dem drei Ebenen der Diagnose und Regelung, oder, wenn keine Regelung stattfindet, der Mitteilung von Informationen vorgesehen sind, die je dazu bestimmt sind, nacheinander vom Kommunikationsmodul (1), vom Zwischenserver (3) und vom spezialisierten Hilfsserver (5a, ..., 5n) angewendet zu werden, damit nach der Durchführung einer Diagnose auf der Ebene N eine weitere Diagnose auf der höheren Ebene N+I durchgeführt wird, wenn keiner der beiden Regelungs- und Informationsmitteilungsschritte auf der Ebene N durchgeführt wird.

6. Verfahren nach einem der Ansprüche 1 bis 5, bei dem bei Erfassung eines Notfallereignisses betreffend die zu prüfende Einrichtung (2) der Kommunikationsmodul (1) sich prioritär mit einem "Black Box"-Server (8) verbindet und Daten betreffend die zu prüfende Einrichtung (2) an ihn überträgt.

7. Verfahren nach einem der Ansprüche 1 bis 6, bei dem der Kommunikationsmodul eine charakteristische Eigenschaft mindestens eines Elements der Einrichtung erfasst und an den fernen Server weiterleitet.

8. Diagnosesystem einer zu prüfenden Einrichtung zur Anwendung des Verfahrens des Anspruchs 1, mit einem Kommunikationsmodul (1), der der zu prüfenden Einrichtung (2) zugeordnet ist, und mit einem Diagnoseserver (3, 5a, 5b, ..., 5n), die miteinander über ein Kommunikationsnetz (6, 7) verbunden sind, wobei der Kommunikationsmodul (1) eingerichtet ist, um Betriebsdaten der Einrichtung (2) zum Server (3, 5a, 5b, ..., 5n) zu senden, und der Server (3, 5a, 5b, ..., 5n) eingerichtet ist, um eine Diagnose auf der Basis der Betriebsdaten der Einrichtung (2) durchzuführen, **dadurch gekennzeichnet, dass** mehrere spezialisierte Hilfsserver (5a, 5b, ..., 5n), die in der Lage sind, Diagnosen auszuführen, und ein Zwischenserver (3) vorgesehen sind, der eingerichtet ist, um unter den mehreren spezialisierten Hilfsservern (5a, 5b, ..., 5n) zu bestimmen, welches der für die Einrichtung (2) geeignete Server ist, und um den Kommunikationsmodul (1) und den geeigneten spezialisierten Hilfsserver für die Erstellung einer Diagnose bezüglich der Einrichtung (2) miteinander zu verbinden.

9. System nach Anspruch 8, bei dem, wenn die zu prüfende Einrichtung ein Rettungsfahrzeug ist, der Zwischenserver (3) eingerichtet ist, um das Rettungsfahrzeug zu einem Rettungszentrum zu lenken, mit dem der spezialisierte Hilfsserver verbunden ist, der für die Einrichtung (2) geeignet ist, und, wenn das Rettungsfahrzeug mindestens ein Gerät zur medizinischen Überwachung eines Patienten aufweist, das mit dem Kommunikationsmodul (1) verbunden ist, der Kommunikationsmodul (1) eingerichtet ist, um Betriebsdaten zu sammeln, die vom medizinischen Überwachungsgerät geliefert werden und vitalen Daten des Patienten entsprechen, und um diese Daten an den spezialisierten Server (5a, 5b, ..., 5n) zu übertragen, und der spezialisierte Server (5a, 5b, ..., 5n) eingerichtet ist, um den Zustand des Patienten aus der Ferne zu verfolgen.
